# EUROPEAN PATENT APPLICATION

(11) **EP 4 550 138 A1**
(43) Date of publication of application: **07.05.2025**
(21) Application number: 24206582.9
(22) Date of filing: 15.10.2024
(51) Int. Cl.: G06F 9/48, G06F 9/455, G06F 9/50

(54) **TRAFFIC MONITORING AND CONTROL DURING LIVE MIGRATION**

(30) Priority: 16.10.2023 US 202363590635 P; 03.04.2024 US 202418625745
(71) Applicant: Mellanox Technologies, Ltd., 2069200 Yokneam (IL)
(72) Inventor: BARNEA, Aviv, 2069200 Yokneam (IL); BEN DAVID, Omri, 2069200 Yokneam (IL); SHALOM, Gal, 2069200 Yokneam (IL); KATZ, Noam, 2069200 Yokneam (IL); ERLICH, Gal, 2069200 Yokneam (IL); OLIEL, Jonathan, 2069200 Yokneam (IL)
(74) Representative: Mathys & Squire

(57) **Abstract**

Systems and methods are directed toward proactive and/or reactive notification and connection parameter adjustments responsive to live migration events. When an application or program is migrated to new underlying hardware, messages may be provided to associated senders to dynamically and/or temporarily adjust different connection parameters to reduce a likelihood of determining the connection is inactive. A proactive notification may broadcast status information during the live migration to each node in a network and/or to particular nodes associated with the migrating receiver. A reactive notification may provide a message regarding receiver status responsive to receiving incoming traffic.

## Description

### CROSS-REFERENCE TO RELATED APPLICATIONS

This application claims priority to and the benefit of U.S. Provisional Patent Application No. 63/590,635, filed October 16, 2023, which is incorporated by reference herein in its entirety.

### TECHNICAL FIELD

At least one embodiment pertains to traffic monitoring and control during application migration to notify associated nodes of potential timeout events.

### BACKGROUND

Virtual machines (VMs) may be migrated between different underlying physical components, such as servers. During a live migration event, a client or application associated with the VM may maintain its connection to the VM and continue to operate associated applications. Live migration may include moving VM memory, connections, and storage from one underlying hardware component to another. However, downtime for the VM and associated applications is still present during the actual movement between the underlying components, and while the downtime may be short (e.g., approximately a second), the VM is frozen or unresponsive during that time. When the VM is frozen or unresponsive, if a connected client tries to transmit traffic to the VM, such as to monitor and verify a connection, the client may not receive a response, which may cause the client to record a timeout event. Too many timeout events may cause the client to determine that the connection is no longer active, which may be an erroneous determination if the timeout was caused because of the timing of the traffic during the live migration. Increasing a number of timeout values or number of acceptable retries may cause delays in accurately detecting inactive connections, which hurts network recovery, availability, and performance.

### SUMMARY

The invention is defined by the claims. In order to illustrate the invention, aspects and embodiments which may or may not fall within the scope of the claims are described herein.

Systems and methods are directed toward proactive and/or reactive notification and connection parameter adjustments responsive to live migration events. When an application or program is migrated to new underlying hardware, messages may be provided to associated senders to dynamically and/or temporarily adjust different connection parameters to reduce a likelihood of determining the connection is inactive. A proactive notification may broadcast status information during the live migration to each node in a network and/or to particular nodes associated with the migrating receiver. A reactive notification may provide a message regarding receiver status responsive to receiving incoming traffic.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIG. 1 illustrates an example environment including a migration manager for live migration operations, in accordance with at least one embodiment;
FIG. 2A illustrates an example call diagram for performing a liveness check for a reliable connection, in accordance with at least one embodiment;
FIG. 2B illustrates an example process for performing a liveness check for a reliable connection, in accordance with at least one embodiment;
FIG. 3 illustrates an example environment for notifying associated nodes during a live migration event, in accordance with at least one embodiment;
FIG. 4A illustrates an example process for providing notifications to associated nodes during a live migration event, in accordance with at least one embodiment;
FIG. 4B illustrates an example process for providing notifications to associated nodes during a live migration event, in accordance with at least one embodiment;
FIG. 4C illustrates an example process for providing notifications to associated nodes during a live migration event, in accordance with at least one embodiment;
FIG. 5A illustrates an example process for providing notifications to associated nodes during a live migration event, in accordance with at least one embodiment;
FIG. 5B illustrates an example process for providing notifications to associated nodes during a live migration event, in accordance with at least one embodiment;
FIG. 5C illustrates an example process for adjusting one or more communication parameters responsive to a live migration event, in accordance with at least one embodiment;
FIG. 6 illustrates components of a distributed system that can be utilized to update or perform inferencing using a machine learning model, according to at least one embodiment;
FIG. 7 illustrates an example data center system, according to at least one embodiment;
FIG. 8 illustrates a computer system, according to at least one embodiment;
FIG. 9 illustrates a computer system, according to at least one embodiment;
FIG. 10 illustrates at least portions of a graphics processor, according to one or more embodiments; and
FIG. 11 illustrates at least portions of a graphics processor, according to one or more embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, non-autonomous vehicles or machines, semi-autonomous vehicles or machines (e.g., in an in-cabin infotainment or digital or driver virtual assistant application)), autonomous vehicles or machines, piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, model training or updating, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational artificial intelligence (AI), generative AI with large language models (LLMs), light transport simulation (e.g., ray-tracing, path tracing, etc.), collaborative content creation for 3D assets, cloud computing and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems for performing generative AI operations using LLMs, systems for performing light transport simulation, systems for performing collaborative content creation for 3D assets, systems implemented at least partially using cloud computing resources, and/or other types of systems.

Approaches in accordance with various embodiments can be used to maintain connections during live migration of VMs by adjusting timeout parameters responsive to messages associated with a VM state. During live migration, a VM may be physically moved from one server to another, and during this time, the VM may be unavailable. If a node (e.g., a client, a sender, a source, etc.) attempts to send a message during this time it may not receive an appropriate response (e.g., acknowledge, negative acknowledge, etc.) and a timeout may be registered. With enough timeouts, the link may be considered "dead" or inactive even though the VM will be available once the migration completes. Embodiments are directed toward proactive and/or reactive approaches to inform nodes that particular VMs are undergoing live migration so that the nodes can adjust their timeout parameters accordingly. For a proactive approach, a VM status during live migration may be provided to nodes that are known to send traffic to the VM (e.g., from a table that is maintained, based on recent traffic history, etc.) or may be broadcast to all nodes within a group. For a reactive approach, an entity may receive all messages directed toward a VM that is offline due to live migration and then respond with a message informing the sender of the VM status so that timeout parameters can be adjusted. The proactive or reactive approaches can be selected based on various network parameters and/or may be used together, among various other options. In this manner, there may be a reduced likelihood of identifying a link as being "dead" due to live migration.

Various embodiments are directed toward maintaining network connections during downtime, such as downtime caused by live migration, by identifying a current status of a VM undergoing live migration and providing status information to one or more nodes or clients associated with the VM. As a result, systems and methods may reduce a likelihood of a timeout event, which may lead to an erroneous determination that a connection is inactive, by providing status information indicative of the VM during live migration. As noted, live migration may maintain connections and availability of a VM during movement to different underlying hardware, such as a server. However, live migration has downtime when the VM is moved to the new hardware and nodes sending traffic at that time may record a timeout due to lack of receipt of a confirmatory message regarding the status or "liveness" of the connection. Current mitigation strategies may include establishing longer periods of time for reply and/or increasing a threshold number of timeouts or retries prior to making a determination of connection liveness, among other options. These strategies are insufficient for modern datacenters because of reduced network recovery, availability, and performance caused by the delays in identifying inactive connections (e.g., dead servers). Similarly, current strategies of maintaining parameters regardless of whether or not a VM is undergoing live migration also leads to problems. Because modern datacenters often keep time periods short and/or try to minimize retries or timeout thresholds, keeping existing values during live migration may lead to false positives and alarms. The false positives may cause unnecessary rebalancing of traffic and/or cause workflows to stop. Systems and methods overcome these problems by monitoring VM status information and informing associated nodes and/or adjusting various timeout values.

In at least one embodiment, a proactive notification system may be used to inform nodes associated with a VM, prior to downtime and/or during the downtime, that the VM is undergoing live migration and, therefore, will be unavailable. For example, an entity (e.g., software, hardware, combinations thereof) may be aware of or monitor VM migration status and may notify associated peers or nodes about expected or current downtime corresponding to an unresponsiveness of a connection. Because the associated peers know the VM migration status, the associated peers may then relax timeout values and/or ignore recorded timeouts for the particular VM. For example, upon receipt of a message indicative of a VM migration status being down, the peers may ignore timeouts from the VM until receiving an updated message indicating the VM migration status is active. Additionally, or alternatively, the entity may periodically send messages to the peers indicating the status of the VM and/or may provide an estimate regarding the current VM status and when the VM will return to active status. One or more embodiments may use a hypervisor to manage and monitor the VM migration status or may use a duplicated VM process to hold a table of all initiators (e.g., sender nodes) sending traffic to one or more VMs associated with a server or cluster. Before disabling VM traffic and while other traffic to the VM is stopped (e.g., during a final stage of the migration), the hypervisor may send notifications to the associated sender nodes. Upon receipt of the messages, the sender nodes may relax timing constraints for all flows sending traffic to the migrating VM for some period of time. For example, the timing constraints may be relaxed for a set period of time (e.g., X seconds) and, if after X seconds, no additional messages are received, the timing constraints may be returned to their previous values. In another example, the timing constraints may be relaxed until a message is received indicative of the VM being returned to an active state. In another example, traffic flow may be halted until a period of time passes (e.g., X seconds) and/or until a message is received indicative of the VM being returned to an active state. In another example, a threshold number of recorded timeouts may be increased for a period of time, such as while the VM is inactive, and then may be reverted back to an original value after the VM is returned to an active state. In this manner, sending nodes may be informed of downtimes prior to occurrence and adjust timeout constraints accordingly.

In at least one embodiment, a reactive notification system may be used to inform nodes associated with a VM of a VM status responsive to receiving traffic during downtime. As noted herein with respect to the proactive system, an entity (e.g., software, hardware, combinations thereof) may be aware of or monitor VM migration status and may notify associated peers or nodes about downtime corresponding to an unresponsiveness of a connection responsive to receiving traffic from an initiator (e.g., sender node). The entity may receive all packets that are targeted toward the VM during the downtime (e.g., traffic may be redirected during the downtime) and then reply to the sender node with a timing relax packet according to network protocols and/or as agreed on the system (e.g., protocol extension). By receiving the message, the sender nodes may then be made aware of the VM migration status and adjust timeout values accordingly. For example, the message may provide instructions for how to adjust the timeout package or pre-set instructions may be used, among others. As a result, the reactive approach may enable an entity, such as the hypervisor, to catch packets sent to a VM that is disabled due to live migration and reply with a flow-specific relax request, which the sender may use to modify timing constraints. Thereafter, the sender node may maintain the relaxed timing constraints until receiving a second message regarding the VM status and/or for a certain period of time, among other options. For example, the sender may wait until a second message is received regarding the VM status until sending additional traffic. As another example, the sender may wait a specified period of time before sending another message. As a further example, the sender may adjust one or more timeout values, such as a period of time to wait for a response and/or a threshold number of timeouts.

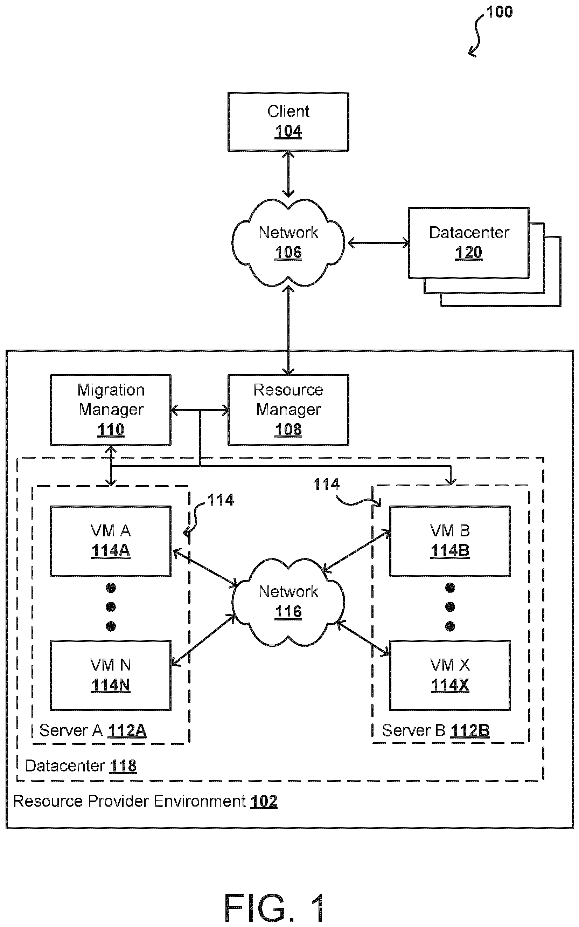

FIG. 1 illustrates an environment 100 that may be used with embodiments of the present disclosure. In this example, a resource provider environment 102 is used to host or otherwise provide access to one or more underlying resources, such as compute resources, storage resources, and/or the like. It should be appreciated that various other components may also be included, or hosted separately in a different environment, and are not shown for clarity with the following discussion. Furthermore, various components are shown by way of example and are not intended to limit the scope of the present disclosure. Resources described with respect to the resource provider environment 102 can include physical and virtual resources, such as both underlying hardware and software executing on the underlying hardware. Moreover, various resources may be illustrated as separate blocks or components, but different embodiments may group or otherwise share functionality between different blocks or components.

In this example, client 104 (e.g., a node, a user, a user device, a client device, etc.) can send and/or receive traffic to/from the resource provider environment 102 over one or more networks 106. The client 104 and/or a client device may be referred to interchangeably in that the client device facilities the interaction with the resource provider environment 102. Furthermore, the client 104 may be representative of one or more nodes, which may include multiple devices executing one or more workflows. The client device can include any appropriate electronic device operable to send and receive requests, messages, or other such information over an appropriate network and convey information back to a user of the device and/or convey information that can be confirmed or otherwise analyzed by software executing on the device. Examples of such client devices include personal computers, tablet computers, smart phones, notebook computers, various edge devices, servers, and the like. Further, while the client device 104 is illustrated as being external to the resource provider environment 102, various embodiments may be directed toward client device(s) 104 that are within or part of the resource provider environment 102, such as one or more servers or compute resources being used by a client. Additionally, the network(s) 106 may include a variety of different networks, including but not limited to, an intranet, the Internet, a cellular network, a local area network (LAN), and other such networks and/or combinations thereof. The network 106 may be a wired or wireless network.

The resource provider environment 102 may be a "cloud" provider network that is a pool of network-accessible computing resources (such as compute, storage, networking, applications, and services), which may be virtualized or bare-metal. These resources can be dynamically provisioned and reconfigured to adjust to variable load. The cloud provider network may implement various computing resources or services, which may include a virtual compute service (referred to in various implementations as an elastic compute service, a VM service, a computing cloud service, a compute engine, or a cloud compute service), data processing service(s), data storage services (e.g., cloud disks service, a managed disk service, a storage area network service, a persistent disk service, or a block volumes service), and/or any other type of network based services (which may include various other types of storage, processing, analysis, communication, event handling, visualization, and security services not illustrated). The resources required to support the operations of such services (e.g., compute and storage resources) may be provisioned in an account associated with the cloud provider.

In this example, traffic, which may be a request, a data stream, a message, and/or the like, can be received by a resource manager 108. The resource manager 108 may be an interface between the resource provider environment 102 and the client 104 and may included components such as application programming interfaces (APIs), load balances, data routers, and/or the like. In various embodiments, the traffic may include one or more portions of a workflow associated with the client 104, such as a workflow to execute compute operations, to execute storage operations, and/or the like. Additionally, the traffic may also include messages transmitted between the client 104 and the resource provider environment 102, such as confirmation messages regarding a state or status of various components of the resource provider environment 102, as discussed herein.

In this example, the resource manager 108 may route information to a migration manager 110 and/or one or more servers 112A, 112B. In this example, the servers 112A, 112B include underlying hardware components that may execute one or more software applications, which in this non-limiting example include virtualized applications referred to as VMs 114. As discussed herein, specific VMs, servers, and other components may be designated by a letter for clarity (e.g., VM A 114A, VM B 114B, etc.). Further, various embodiments may illustrate the migration manager 110 as a separate component, but it should be appreciated that one or more portions of the migration manager 110 may be executed on the servers 112A, 112B and/or be incorporated into software executing on the servers 112A, 112B, such as a hypervisor executing on the servers 112A, 112B to create and monitor the VMs 114.

Various embodiments may also include an internal network 116 for communication and/or data transmission between the different servers 112A, 112B and other various components, which as noted herein, may be a wired or wireless network. The internal network 116 may be used to facilitate reliable connections between individual servers 112A, 112B and/or with the client 104. In one or more embodiments, the internal network 116 may be a common or shared with the network 106, and therefore, illustration as a separate network is provided by way of example only. Furthermore, it should be appreciated that various embodiments may also be used to transmit information between different physical locations associated with resource provider environments 102. As noted, the resource provider environment 102 may include one or more locations that include various hardware components. One or more of these components may be positioned within a datacenter 118, which may be configured to communicate with one or more additional datacenters 120. Representations of servers 112A, 112B and/or datacenters 118, 120 are provided by way of example because different VMs in different datacenters may be used to communicate with one another and/or to execute one or more workloads. Furthermore, traffic may be routed in accordance with various polices and/or to adjust for different preferences, such as low latency, high throughout, certain types of data storage, and/or the like.

In operation, it may be beneficial to migrate or move VMs 114 between different servers (e.g., to different underlying hardware). Migration of VMs 114 may enable updates or maintenance for the underlying hardware and/or may be used to modify operational capabilities of the VMs 114. For example, a VM may be moved to a server that has higher performing underlying hardware which may enable different or improved operations for the VM. In another example, the VMs may be moved to datacenters that are physically closer to a traffic source (e.g., a source node) to reduce latency. As another example, VMs may be migrated responsive to maintenance on underlying resources or responsive to outages (e.g., power outages, natural disasters, etc.) to maintain operability for end users. Migrating VMs may be performed as a "live migration" where a VM is moved from one physical machine (e.g., a server) to another, even as its applications continue to execute during migration. A live migration event may include steps such as memory state migration, CPU state migration, and virtual disk state migration. A migration manager may be used to transfer data from the VM's memory to a target machine, create the CPU state on the target machine (e.g., states of the CPU, memory, and storage), and then suspend the VM for copy and initialization at the target machine. The process may minimize downtime, but as noted herein, the suspension of the VM occurs prior to initialization at the target machine. During the downtime (e.g., when the VM is suspended), if one or more clients or other resources send traffic (e.g., a message, a data stream, etc.) to the VM, the sender may not receive an acknowledgement of receipt of the information and log a timeout event. With enough timeout events logged, the sender may determine that the link or connection to the VM is down, which may not be true, and as a result resources may be wasted trying to balance or otherwise redirect the traffic from the sender. Systems and methods of the present disclosure may be used during VM migration, such as live migration, to proactively and/or reactively provide VM state information to associated resources to reduce a likelihood of timeout events that may lead to incorrect determinations of connectivity status.

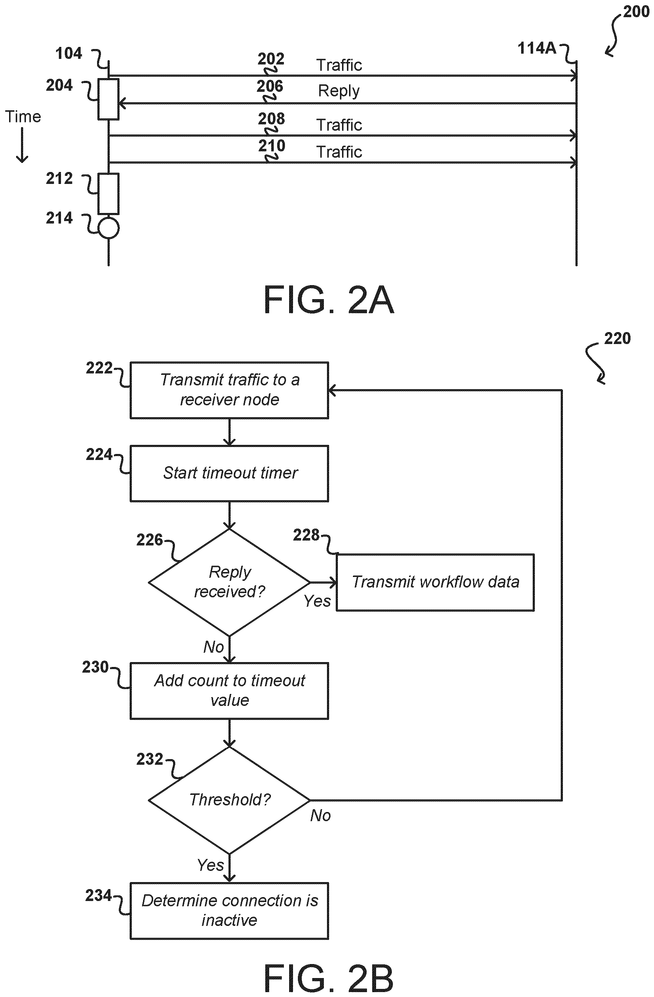

FIG. 2A illustrates an example call diagram 200 that may be used with embodiments of the present disclosure. In this example, the client 104 (e.g., initiator, sender, etc.) may transmit traffic 202 to the VM A 114A (e.g., receiver, target, etc.). It should be appreciated that the client 104 may transmit the information via one or more proxies, such as, for example, a different VM executing on one or more of the servers 112A, 112B. Moreover, while various embodiments may be described with respect to VMs and client devices, it should be appreciated that the servers associated with the VMs and/or various other components, such as connection managers, may also be used to determine connectivity status between a variety of different components. In at least one embodiment, connections between the client 104 and the VM A 114A may be formed by different communication protocols, such as, but not limited to, a remote direct memory access (RDMA) connection, an RDMA over converged internet (RoCE) connection, a transmission control protocol (TCP) connection, and/or the like. Moreover, in at least one embodiment, the RDMA connections may include RDMA with reliable connections (RC) and/or with dynamic connections (DC). Certain embodiments may be directed toward reliable connections where a reliable network monitors the "liveness" of different connections, such as by using acknowledge (ACK) and negative acknowledge (NACK) messages. While these particular network protocols are identified, it should be appreciated that various protocols may be used with systems and methods of the present disclosure where it is desirable to maintain network connections between different nodes of a connected system, such as a cluster, to maintain and/or enable network recovery, availability, and/or performance.

In this example, after sending the traffic 202, such as a message to verify the connection between the client 104 and the VM A 114A, the client 104 and/or other software executing on a server, a hypervisor, a server manager, etc. may begin a timer 204. The timer 204 may be associated with one or more connection protocols or parameters, such as those established by a system administrator, to determine whether or not a "timeout" event has occurred. The timeout may correspond to a failure to receive a reply from the VM A 114A. For example, upon receipt of the traffic 202, the VM A 114A and/or other software executing on the a server associated with the VM A 114A, a connection manager, a hypervisor, etc., may transmit a reply 206, such as an ACK or a NACK to indicate whether the transmitted data (e.g., a data packet) was correctly or incorrectly received. If the reply 206 is received before the end of a timer duration (e.g., the end of the block representing the timer 204), the client 104 (or other systems noted herein) may determine that the connection is valid and then transmit additional traffic 208 as part of one or more workflows. However, in another example, the client 104 (or other systems noted herein) may transmit traffic 210, such as another message to verify the connection, to the VM A 114A (or other systems noted herein) and begin a second timer 212. If a reply is not received before the end of the second time, then the client 104 (or other systems noted herein) may log a timeout event 214. Based on different connection protocols and parameters, a threshold number of timeout events may be indicative of a dead or inactive connection, which may cause rebalancing, stops in work flows, and/or the like. However, the timeout may be an erroneous timeout because the VM A 114A may be undergoing a live migration event, and therefore, may only be temporarily unavailable during movement of the VM A 114A to different underlying hardware. Systems and methods of the present disclosure address this deficiency with traditional network confirmations and may proactively and/or reactively alert sending nodes of migration statuses for different targets (e.g., VMs) to enable dynamic modification to timeout criterion to reduce a risk of erroneously determining a connection is inactive.

FIG. 2B illustrates an example process 220 of a connection liveness evaluation, that may be used with embodiments of the present disclosure. In this example, traffic is transmitted to a receiver node 222. As discussed, the traffic may be transmitted from one or more sender nodes (e.g., servers, VMs executing on servers, client devices, etc.) and may include a message or data packet regarding a status of a connection formed between the sender node and the receiver node. Upon sending the traffic, the sender node may initiate a timeout timer 224. The timeout timer may be a countdown period to receive a reply, such as ACK or NACK from the receiver node. A time period for the timeout timer may vary based on different network parameters and settings and may be tuned for a given workload type and/or connection. It may then be determined whether a reply is received 226 before the expiration of the timeout timer. If the reply is received, workflow data may be transmitted 228. If not, then a count may be added to a timeout value 230. The timeout value may correspond to a maximum number of timeouts received over a period of time to determine whether or not a connection is live. For example, a timeout value may be a set number over a period of time (e.g., X timeouts over Y minutes), a set number of a given workload life (e.g., X timeouts until the workload is processed), and/or any other reasonable parameter. The timeout value may then be compared to a threshold number to determine whether the threshold has been exceeded and/or met 232. If not, then a follow up message may be transmitted or various other steps specified by the network parameters. However, if the threshold has been exceed and/or met, then the connection may be deemed inactive 234. Inactive connections may lead to stoppages in workflows, traffic rebalancing, and/or the like, and as a result, inadvertent or inaccurate determinations of connection inactivity may reduce network reliability, availability, and/or performance. Embodiments of the present disclosure may be used to modify different timeout parameters in the event a VM is undergoing live migration to reduce a likelihood of incorrect determinations of connection inactivity.

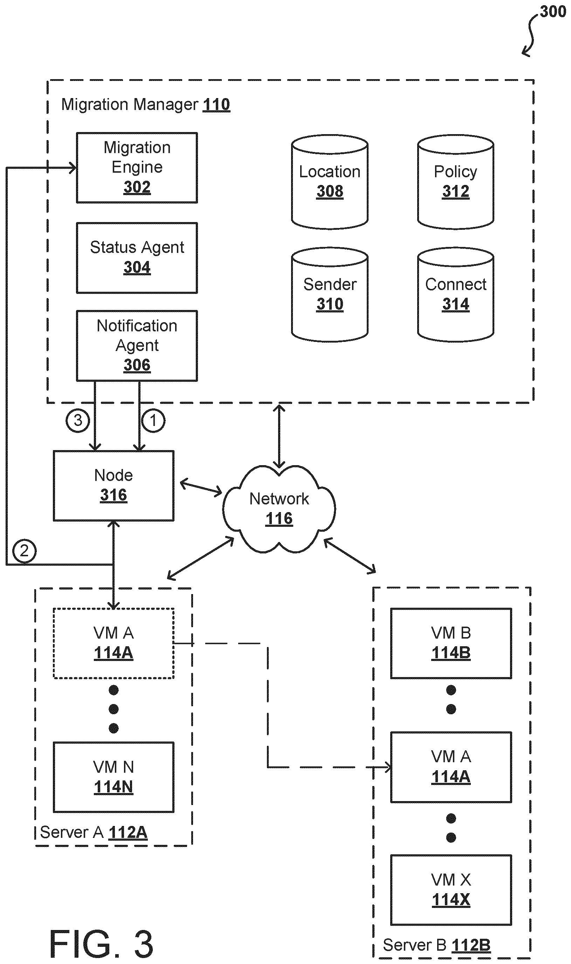

FIG. 3 illustrates an example environment 300 for managing timeout determinations that may be used with embodiments of the present disclosure. In this example, the migration manager 110 is illustrated as monitoring and/or facilitating migration of VM A 114A from the server A 112A to the server B 112B via the network 116. As noted herein, the network 116 may be an internal or an external network and, in various embodiments, may be associated with various communication protocols, such as RoCE. The migration manager 110 may be associated with one or more of the individual servers 112A, 112B, the individual VMs 114, and/or with a central management system for a datacenter and/or the like. For example, the migration manager 110 may be part of rack control software system that monitors traffic and migration for each VM associated with servers of a given rack. In another example, the migration manager 110 may be integrated into a hypervisor. As another example, there may be multiple migration managers 110, such as one at a sender server and another at a receiver server.

The illustrated migration manager 110 includes a migration engine 302. The migration engine 302 may be used to plan and/or facilitate migration of VMs from one server to another (e.g., from one set of underlying hardware to a different set of underlying hardware). The migration engine 302 may be used to execute a live migration, as described herein, which may be a step-by-step process to transfer a VM to a new location while maintaining operability of connections and/or applications associated with the VM. A live migration may occur in a number of steps or operations, which may include at least some overlapping, parallel, and/or partially parallel operations. The steps may include pre-migration or preparation where a target host is preselected for migration and its associated VM is made active on a client side. The migration engine 302 (e.g., a hypervisor) may duplicate memory pages from a source file to a destination file in preparation for the migration. Reservation may also be used to reserve a container or other computing resources for the migrating VM. By adding this step, the likelihood of migration to a server, node, and/or cluster that has insufficient capacity for the VM may be reduced. Next, a pre-copy process (e.g., iterative pre-copy) may use an iterative push phase and a stop-and-copy phase to transfer pages from the host to the destination. Running OS instances may then be suspended at the host server and traffic may be redirected to the destination. In one or more embodiments, inadvertent timeout counts may be received if traffic is routed to the host server when the instances are suspended. A CPU state may be determined and then transferred to the destination. Upon confirmation of the transfer of the VM, the host server may then discard the files and the new destination is now the primary endpoint point traffic to the VM. The VM may be activated at the destination to resume normal operations.

During the migration process, a status agent 304 may be used to track the status of the migration through the various steps. For example, the status agent 304 may be used to make a determination whether or not the VM is suspended at the original location. The status acquired by the status agent 304 may then be used by a notification agent 306 to inform associated nodes of the status of the VM. In at least one embodiment, the notification agent 306 is proactive and provides information to the associated nodes prior to migration. In at least one embodiment, the notification agent 306 is reactive and provides information to the associated nodes after and/or during the migration and in response to receiving traffic to an offline VM. Certain embodiments may also combine both the proactive and reactive processes.

Information used during the migration process may be acquired from one or more datastores. For example, a location datastore 308 may be used to track and maintain location information for different VMs with respect to the various servers, datacenters, and/or the like. Location information may include a particular hardware component associated with a given VM, a physical location of the hardware component, capabilities of the hardware component, and various other information. The migration engine 302 may also use information in the location datastore 308 to identify a destination location for migrating a VM. For example, the location datastore 308 may provide information associated with a set of VMs that are performing a workload for a given client, determine that performance may be improved if each VM was executing on a server within a common rack, identify the appropriate location for migration, and then migrate VMs accordingly.

Systems and methods may also include a sender datastore 310 to track different traffic flows between the various components. For example, the sender datastore 310 may identify which VMs and/or end users are transmitting traffic to particular VMs and/or servers. Tracking the traffic flow may be used, as noted herein, to identify various senders for providing proactive notifications regarding migration statuses of different VMs. The illustrated embodiment also includes a policy datastore 312 that may store different parameters or configurations for establishing connections, maintaining connections, providing migration status notifications, modifying timeout polices, and/or the like. For example, during a migration of a VM, the policy datastore 312 may be used to determine a revised timeout policy for a sender node. The illustrated embodiment also includes a connection datastore 314, which may track a type of connection established between different components and also different connection policies. Information from the connection datastore 314 may be used to select a particular policy from the policy datastore 312, which may then determine the notifications generated and transmitted by the notification agent.

In this example, a node 316 may represent a client and/or client device that is transmitting traffic to one or more servers and/or an associated VM of the one or more servers. In this example, the node 316 is in communication with the VM A 114A and may be transmitting traffic, such as a workload, for execution using the VM A 114A. During operation, the VM A 114A may be selected and/or determined to be a candidate for migration, for example based on one or more migration policies. The migration engine 302 may initialize the migration of VM A 114A from the server A 112A to the server B 112B. However, as discussed herein, even with a live migration there may be a period of time when the VM A 114A is no longer able to respond to traffic from the node 316, which may lead to the node 316 determining that the connection is dead and may lead to an increased timeout count. Systems and methods of the present disclosure may address this problem, among others, by using the migration manager 110 to maintain a migration status of the VM A 114A and provide information back to the node 316, proactively and/or reactively, regarding the status so that inadvertent timeouts are not recorded.

In a first example associated with a proactive notification policy, the migration manager 110 may track and record the migration status of the VM A 114A, for example, using the status agent 304. The status agent 304 may provide the migration status and/or the upcoming migration status of the VM A 114A. Based on this information, the notification agent 306 may transmit a message, labeled as "1," to the node 316 prior to and/or when the VM A 114A is unavailable due to being moved to the server B 112B. The message may include migration status information and instructions based on the migration status. For example, the instructions may provide an estimated period of time for when the VM A 114A will be unavailable. During this time, the node 316 may then modify traffic sending patterns to avoid sending traffic and/or connection checks during this period of time. In another embodiment, the message may include a notification that the VM A 114A is unavailable due to migration and may inform the node 316 to not send additional traffic until another message is received informing the node 316 that the VM A 114A is available. Additional embodiments may also provide an indication that the VM A 114A is offline and that the node 316, when checking connections, should increase its timeout values, such as by increasing a time period to receive a reply and/or by increasing a number of timeouts received until the connection is determined to be dead. Various embodiments may also combine different messages and techniques, such as providing an estimated time and then providing updates. It should be appreciated that the message techniques and approaches may be part of the policies selected from the policy datastore 312 and may be particularly selected to reduce network traffic and/or to reduce a likelihood of false timeouts.

In at least one embodiment, the node 316 receives the proactive message based, at least in part, on information acquired from the sender datastore 310. For example, the sender datastore 310 may identify each node sending traffic to the VM A 114A and then, once the migration engine 302 identifies the VM A 114A as one to be migrated, the messages may go out (e.g., at a designated time) to provide information to the node 316 prior to sending messages that are unlikely to be received due to the migration. As a result, there may be a reduced likelihood that the node 316 does not receive a reply, which would traditionally cause a timeout count to increase, and may lead to an inadvertent determination a connection was inactive. Additionally, in various embodiments, systems and methods enable the node 316 and/or management software associated with the node 316 to dynamically and/or temporally modify timeout tracking procedures. For example, the node 316 may receive the proactive message, temporarily modify a timeout procedure (e.g., longer time, increase thresholds, etc.), and then revert back to the previous information once a message is received and/or a time period passes and the VM A 114A is returned in service after migrating to the server 112.

One or more embodiments may also be directed toward a reactive method in which a VM undergoing migration has its traffic diverted to the migration manager 110 and, responsive to the incoming messages, a notification may be transmitted to the sender indicative of the VM status. For example, the migration manager 110 may determine, for example using the status agent 304, a migration status for the VM A 114A indicative of being unavailable due to being moved to the server B 112B. While the VM A 114A is unavailable, incoming messages, such as those to determine a connection status, among others, may be rerouted to the migration engine 302, as shown by the line represented as "2" and then the notification agent 306 may transmit a message to the node 316 indicative of the status of the VM A 114A, as shown by the line represented as "3." Such a system may reduce network traffic because messages for migration status would only be transmitted responsive to receiving an incoming message to the unavailable VM. In at least one embodiment, the messages transmitted from the notification agent 306 may include information such as a status of the VM A 1 14A, an expected time for unavailability, a command to modify one or more timeout parameters, and/or combinations thereof, as indicated herein.

Various embodiments may also integrate both the proactive and reactive procedures into a single operation. For example, a proactive message may be transmitted prior to moving a VM to new underlying hardware and a timing requirement may be relaxed and/or a connection check may be delayed. If the delay period passes, and the VM is still unavailable, the reactive procedure may be used to provide an update to the sending node. Accordingly, systems and methods may be used to proactively provide instructions and then to follow up with additional status updates if necessary, for example if there is an error during migration and the procedure takes longer than expected.

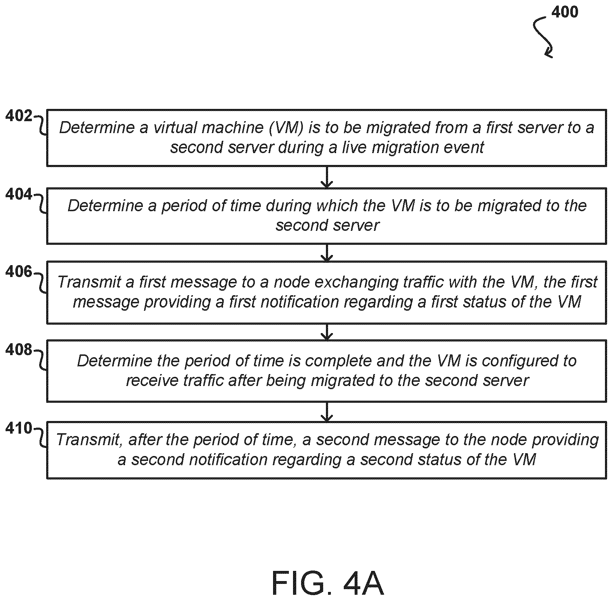

FIG. 4A illustrates an example process 400 that can be used to provide status information during a live migration event. It should be understood that for this and other processes presented herein that there may be additional, fewer, or alternative operations performed in similar or alternative orders, or at least partially in parallel, within the scope of the various embodiments unless otherwise specifically stated. Further, while this example refers to ports, it should be understood that various other components may also use such a process within the scope of various embodiments. In this example, a VM is determined to be migrated from a first server to a second server during a live migration event 402. For example, the VM may be selected to improve operational performance of the VM, permit the underlying hardware to undergo maintenance, and/or the like. A time period for the migration may be determined 404 and a first message may be provided to a node exchanging traffic with the VM 406. For example, the node may receive a message providing a first notification regarding a first status of the VM, such as a notification to inform the node that the VM is to be offline for a period of time and/or is currently offline. It may then be determined that the VM is configured to receive traffic, such as after the period of time to complete the live migration 408, and a second message may be transmitted to the node 410 to inform the node of a second status of the VM. In this manner, VM status may be proactively provided to associated nodes during live migration events.

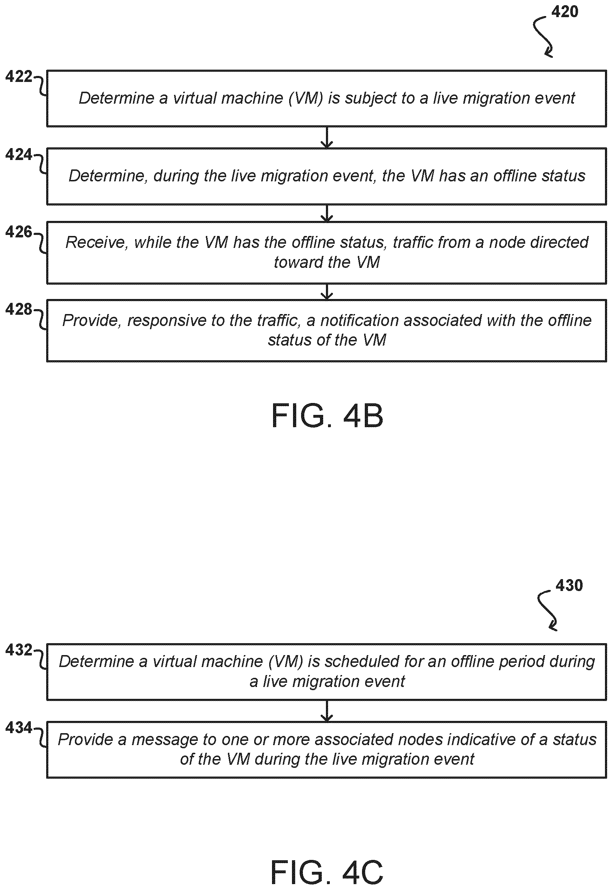

FIG. 4B illustrates an example process 420 that can be used to provide status information during a live migration event. In this example, a VM is identified as being part of a live migration event 422. For example, a migration manager may determine which VMs are eligible or may preferably be migrated. During the live migration event, a VM status may be determined to be offline 424. As noted herein, live migration events may permit certain continuing functionality for different VMs, but during movement between different underlying physical components, there may be a period of unavailability where traffic transmitted to the VM will not be received. In at least one embodiment, traffic may be determined to be directed or received at the VM when the VM is offline 426. For example, an associated node may transmit a message to verify a connection while the VM is offline. Various embodiments may, responsive to the traffic, provide a notification to the associated node indicative of the status of the VM 428. For example, the notification may inform the node that the VM is undergoing live migration, but will be available in a given period of time and/or to provide instructions to modify certain timeout parameters. Accordingly, systems and methods may reactively provide notifications to incoming traffic while VMs undergo live migration.

FIG. 4C illustrates an example process 430 that can be used to provide status information during a live migration event. In this example, it is determined that a VM is scheduled for an offline period during a live migration 432. For example, a time of the live migration event may be known and/or the offline period of may be estimated based on one or more additional steps in the live migration process. A message may then be provided to one or more associated nodes indicative of a status of the VM during the live migration event 434. For example, the message may provide a notification of the offline status, an estimate for a duration of the offline status, and/or combinations thereof. Furthermore, the message may also provide additional instructions for the associated nodes during the live migration event. In this manner, the associated nodes may be provided with status updates, which may prevent the nodes from transmitting information that may not be received by the VM during the offline period.

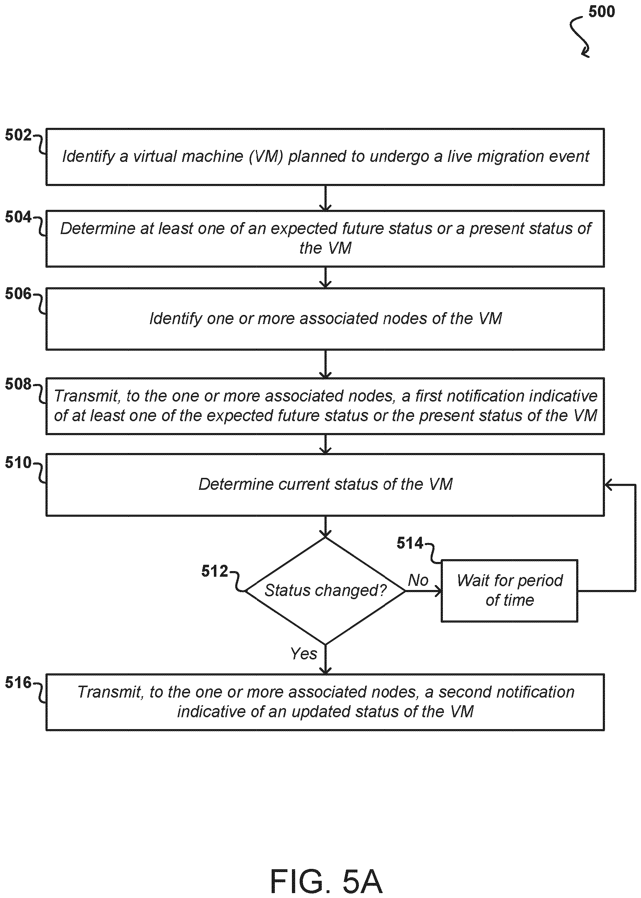

FIG. 5A illustrates an example process 500 for proactively providing a VM status notification to one or more associated nodes. In this example, a VM that is planned to undergo a live migration event is identified 502. The VM may be identified due to a scheduled operation, such as to perform maintenance or updates to an underlying hardware system. At least one of an expected future status or a present status of the VM may be determined 504. For example, systems and methods may estimate when the VM will be offline during the live migration operation. Additionally, in one or more embodiments, a current status of the VM may be determined, such as the status while the VM is being transmitted to different underlying hardware.

In at least one embodiment, one or more nodes associated with the VM may be identified 506. An associated node may correspond to one or more nodes that have transmitted traffic to the VM. There may be a time cutoff for identifying the associated nodes. For example, a node that has not transmitted traffic for longer than a threshold period of time may not be considered an associated node. Additionally, scheduled operations or ongoing operations for the VM may be used to identify the associated nodes, such as determining which nodes have current workloads being transmitted to the VMs, which nodes have completed workloads, which nodes have scheduled workloads, and/or the like. It should be appreciated that various embodiments may optionally broadcast information regarding the node status to all nodes in an associated cluster to reduce a likelihood that new traffic will be sent to the VM during the live migration.

Various embodiments may be associated with a proactive notification system in which VMs status is provided to the associated nodes in advance of or when a status of the VM is determined to be offline 508. Providing the notification proactively may reduce traffic across the network because nodes may delay or otherwise provide data to different VMs during the offline period. Additionally, or alternatively, providing the notification proactively may enable different nodes to modify one or more timeout parameters associated with verifying connection health. The notification may include the expected future status or the current status. Providing the expected future status may include a time frame or an expected period of time for when the VM will be offline and providing the current status may be informative as to the presently recorded status of the VM.

A current status of the VM may be determined after a period of time 510 and it may be determined whether or not the status has changed in the period since the message was transmitted 512. For example, the message may include status information informing the associated nodes that the VM is offline. After a period of time, the VM status may be rechecked, such as after the estimated period of time provided in the message, after a set period of time, and/or the like. If the status has not changed, then the system may wait for a period of time 514 and then recheck. If the status has changed, then a message may be transmitted to the associated nodes indicative of an updated status of the VM 516, which may include informing the associated nodes the VM is back online and able to receive traffic. In this manner, proactive notifications may be transmitted to associated nodes regarding VM status and status updates.

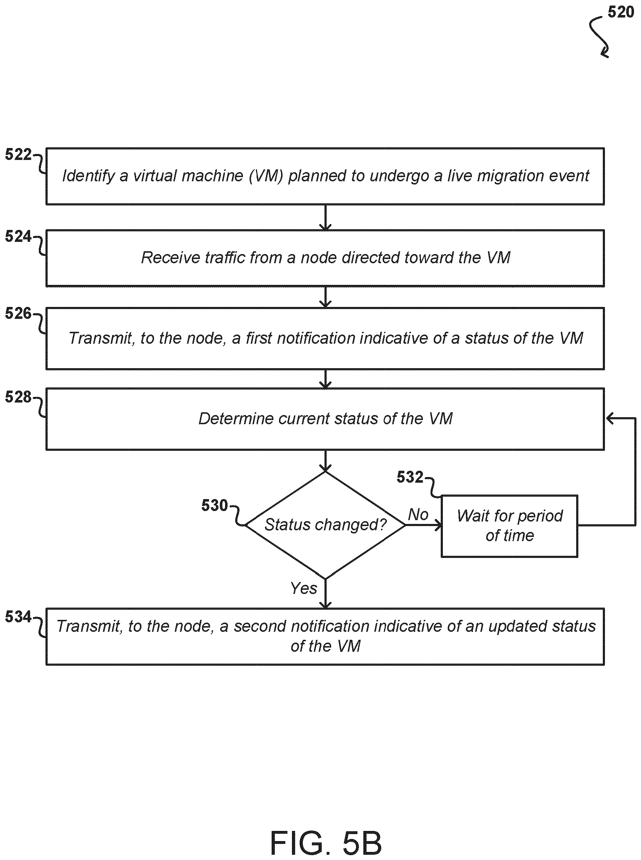

FIG. 5B illustrates an example process 520 for reactively providing a VM status notification to one or more associated nodes. In this example, a VM that is planned to undergo a live migration event is identified 522. The VM may be identified due to a scheduled operation, such as to perform maintenance or updates to an underlying hardware system. Traffic directed toward the VM may then be received 524. For example, due to a status of the VM associated with the live migration event, traffic may be temporarily routed to a migration manager, among other options.

Various embodiments may be associated with a reactive notification system in which VMs status is provided to the associated nodes responsive to receipt of traffic while the VM is offline, such as due to undergoing a live migration event 526. Providing the notification reactively may reduce traffic across the network compared to a proactive approach because only the nodes that need to know the VM status are informed of the VM status. In at least one embodiment, providing the notification reactively may enable different nodes to modify one or more timeout parameters associated with verifying connection health. The notification may include the expected future status or the current status. Providing the expected future status may include a time frame or an expected period of time for when the VM will be offline and providing the current status may be informative as to the presently recorded status of the VM.

A current status of the VM may be determined after a period of time 528 and it may be determined whether or not the status has changed in the period since the message was transmitted 530. For example, the message may include status information informing the associated nodes that the VM is offline. After a period of time the VM status may be rechecked, such as after the estimated period of time provided in the message, after a set period of time, and/or the like. If the status has not changed, then the system may wait for a period of time 532 and then recheck. If the status has changed, then a message may be transmitted to the associated nodes indicative of an updated status of the VM 534, which may include informing the associated nodes the VM is back online and able to receive traffic. In this manner, reactive notifications may be transmitted to associated nodes regarding VM status and status updates.

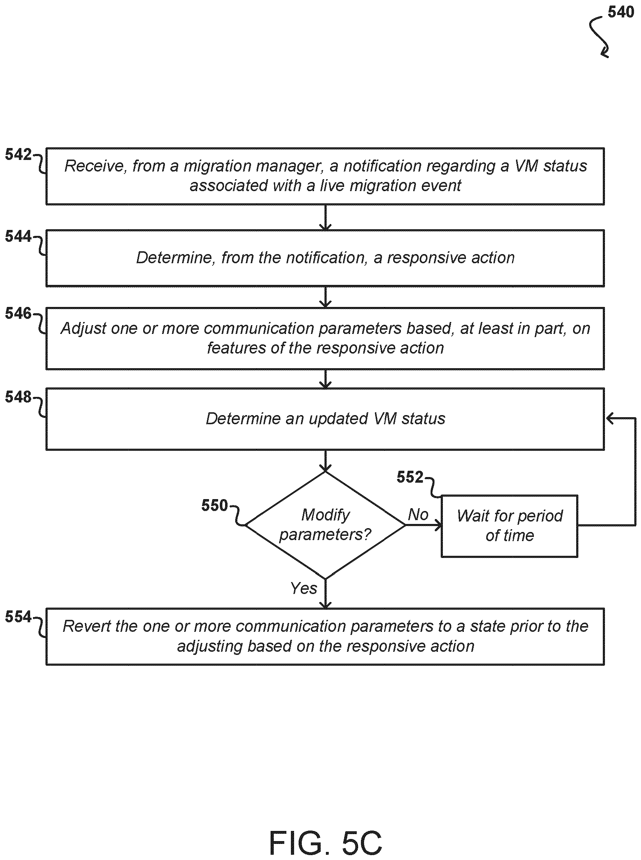

FIG. 5C illustrates an example process 540 for adjusting one or more communication parameters responsive to a target status. In this example, a notification is received regarding a VM status 542. For example, the notification may be received by a node transmitting traffic to the VM. A responsive action may be determined from the notification 544. The responsive action may include instructions, such as delaying sending traffic for a period of time, adjusting timeout parameters, and/or the like. In at least one embodiment, the responsive action may be based, at least in part, on a connection type.

One or more communication parameters, for the node, may be adjusted based, at least in part, on features of the responsive action 546. As an example, the node may perform periodic connection checks with the VM. These connection checks may include sending a message, starting a timer, and then waiting to receive an acknowledge or negative acknowledge response. If the response is received within a threshold period of time, the connection may be confirmed for that period of time. If the response is not received within the threshold period of time, a timeout may be recorded. There may also be a threshold number of timeouts associated with the communication parameters. If a number of timeout recorded over a period of time exceeds and/or meets a timeout threshold, then the connection may be deemed dead or otherwise inactive. In at least one embodiment, the responsive action may include instructions for modifying communication parameters associated with the timeouts. For example, periods of time between connections checks may be increased or paused until another set of instructions are received. In another example, a time period for receiving the reply acknowledge or negative acknowledge may be received. As another example, the threshold number of timeouts may be increased so that more timeouts can be received before determining a connection is inactive. Changes to the communication parameters may be temporary (e.g., for a period of time associated with the VM status) or may be associated with receiving additional follow up instructions, among other options.

In at least one embodiment, an updated VM status is determined 548. The updated status may be determined by evaluating a follow up notification including information regarding the VM status. Additionally, the status may be assumed by determining that a threshold period of time has passed, such as when an original notification predicted a period of time of inactivity for the VM. Based on the updated status, it may be determined whether or not to change the one or more communication parameters 550. For example, if the status has not changed, then it may be desirable to maintain the current parameters and wait for a period of time 552. If, however, the status has change and the VM is now available, it may be desirable to revert the one or more communication parameters to their previous values 554. In this manner, communication parameters may be dynamically and/or temporarily adjusted based on VM statuses during live migration.

As discussed, aspects of various approaches presented herein can be lightweight enough to execute on a device such as a client device, such as a personal computer or gaming console, in real time. Such processing can be performed on, or for, content that is generated on, or received by, that client device or received from an external source, such as streaming data or other content received over at least one network. In some instances, the processing and/or determination of this content may be performed by one of these other devices, systems, or entities, then provided to the client device (or another such recipient) for presentation or another such use.

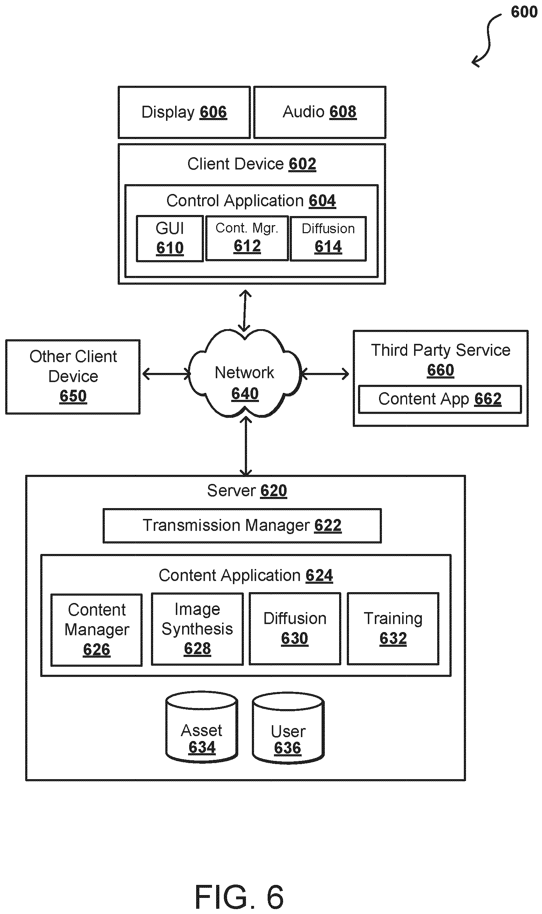

As an example, FIG. 6 illustrates an example network configuration 600 that can be used to provide, generate, modify, encode, process, and/or transmit image data or other such content. In at least one embodiment, a client device 602 can generate or receive data for a session using components of a control application 604 on client device 602 and data stored locally on that client device. In at least one embodiment, a content application 624 executing on a server 620 (e.g., a cloud server or edge server) may initiate a session associated with at least one client device 602, as may utilize a session manager and user data stored in a user database 636, and can cause content such as one or more digital assets (e.g., object representations) from an asset repository 634 to be determined by a content manager 626. A content manager 626 may work with an image synthesis module 628 to generate or synthesize new objects, digital assets, or other such content to be provided for presentation via the client device 602. In at least one embodiment, this image synthesis module 628 can use one or more neural networks, or machine learning models, which can be trained or updated using a training module 632 or system that is on, or in communication with, the server 620. This can include training and/or using a diffusion model 630 to generate content tiles that can be used by an image synthesis module 628, for example, to apply a non-repeating texture to a region of an environment for which image or video data is to be presented via a client device 602. At least a portion of the generated content may be transmitted to the client device 602 using an appropriate transmission manager 622 to send by download, streaming, or another such transmission channel. An encoder may be used to encode and/or compress at least some of this data before transmitting to the client device 602. In at least one embodiment, the client device 602 receiving such content can provide this content to a corresponding control application 604, which may also or alternatively include a graphical user interface 610, content manager 612, and image synthesis or diffusion module 614 for use in providing, synthesizing, modifying, or using content for presentation (or other purposes) on or by the client device 602. A decoder may also be used to decode data received over the network 640 for presentation via client device 602, such as image or video content through a display 606 and audio, such as sounds and music, through at least one audio playback device 608, such as speakers or headphones. In at least one embodiment, at least some of this content may already be stored on, rendered on, or accessible to client device 602 such that transmission over network 640 is not required for at least that portion of content, such as where that content may have been previously downloaded or stored locally on a hard drive or optical disk. In at least one embodiment, a transmission mechanism such as data streaming can be used to transfer this content from server 620, or user database 636, to client device 602. In at least one embodiment, at least a portion of this content can be obtained, enhanced, and/or streamed from another source, such as a third party service 660 or other client device 650, that may also include a content application 662 for generating, enhancing, or providing content. In at least one embodiment, portions of this functionality can be performed using multiple computing devices, or multiple processors within one or more computing devices, such as may include a combination of CPUs and GPUs.

In this example, these client devices can include any appropriate computing devices, as may include a desktop computer, notebook computer, set-top box, streaming device, gaming console, smartphone, tablet computer, VR headset, AR goggles, wearable computer, or a smart television. Each client device can submit a request across at least one wired or wireless network, as may include the Internet, an Ethernet, a local area network (LAN), or a cellular network, among other such options. In this example, these requests can be submitted to an address associated with a cloud provider, who may operate or control one or more electronic resources in a cloud provider environment, such as may include a data center or server farm. In at least one embodiment, the request may be received or processed by at least one edge server, that sits on a network edge and is outside at least one security layer associated with the cloud provider environment. In this way, latency can be reduced by enabling the client devices to interact with servers that are in closer proximity, while also improving security of resources in the cloud provider environment.

In at least one embodiment, such a system can be used for performing graphical rendering operations. In other embodiments, such a system can be used for other purposes, such as for providing image or video content to test or validate autonomous machine applications, or for performing deep learning operations. In at least one embodiment, such a system can be implemented using an edge device, or may incorporate one or more Virtual Machines (VMs). In at least one embodiment, such a system can be implemented at least partially in a data center or at least partially using cloud computing resources.

### DATA CENTER

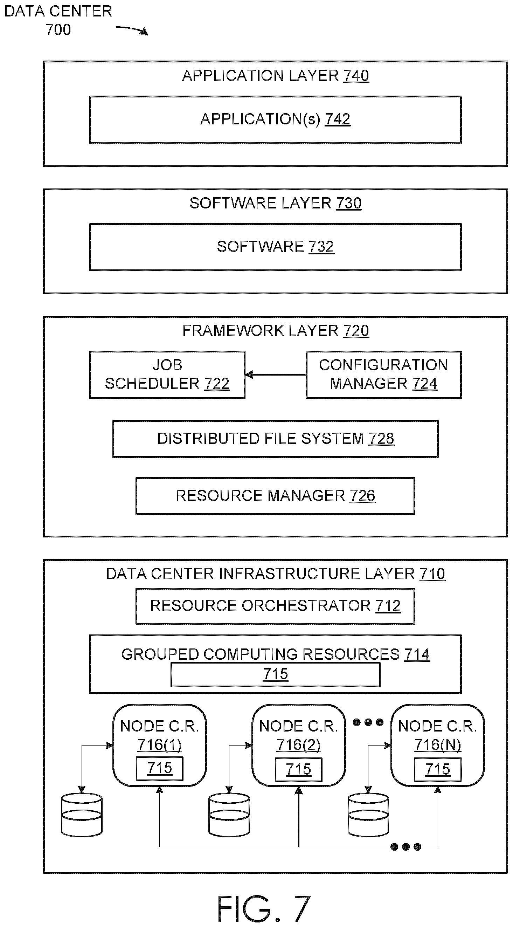

FIG. 7 illustrates an example data center 700, in which at least one embodiment may be used. In at least one embodiment, data center 700 includes a data center infrastructure layer 710, a framework layer 720, a software layer 730, and an application layer 740.

In at least one embodiment, as shown in FIG. 7, data center infrastructure layer 710 may include a resource orchestrator 712, grouped computing resources 714, and node computing resources ("node C.R.s") 716(1)-716(N), where "N" represents any whole, positive integer. In at least one embodiment, node C.R.s 716(1)-716(N) may include, but are not limited to, any number of central processing units ("CPUs") or other processors (including accelerators, field programmable gate arrays (FPGAs), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 716(1)-716(N) may be a server having one or more of above-mentioned computing resources.

In at least one embodiment, grouped computing resources 714 may include separate groupings of node C.R.s housed within one or more racks (not shown), or many racks housed in data centers at various geographical locations (also not shown). Separate groupings of node C.R.s within grouped computing resources 714 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 712 may configure or otherwise control one or more node C.R.s 716(1)-716(N) and/or grouped computing resources 714. In at least one embodiment, resource orchestrator 712 may include a software design infrastructure ("SDI") management entity for data center 700. In at least one embodiment, resource orchestrator may include hardware, software or some combination thereof.

In at least one embodiment, as shown in FIG. 7, framework layer 720 includes a job scheduler 722, a configuration manager 724, a resource manager 726 and a distributed file system 728. In at least one embodiment, framework layer 720 may include a framework to support software 732 of software layer 730 and/or one or more application(s) 742 of application layer 740. In at least one embodiment, software 732 or application(s) 742 may respectively include web-based service software or applications, such as those provided by Amazon Web Services, Google Cloud and Microsoft Azure. In at least one embodiment, framework layer 720 may be, but is not limited to, a type of free and open-source software web application framework such as Apache Spark^{™} (hereinafter "Spark") that may use distributed file system 728 for large-scale data processing (e.g., "big data"). In at least one embodiment, job scheduler 722 may include a Spark driver to facilitate scheduling of workloads supported by various layers of data center 700. In at least one embodiment, configuration manager 724 may be capable of configuring different layers such as software layer 730 and framework layer 720 including Spark and distributed file system 728 for supporting large-scale data processing. In at least one embodiment, resource manager 726 may be capable of managing clustered or grouped computing resources mapped to or allocated for support of distributed file system 728 and job scheduler 722. In at least one embodiment, clustered or grouped computing resources may include grouped computing resource 814 at data center infrastructure layer 710. In at least one embodiment, resource manager 726 may coordinate with resource orchestrator 712 to manage these mapped or allocated computing resources.

In at least one embodiment, software 732 included in software layer 730 may include software used by at least portions of node C.R.s 716(1)-716(N), grouped computing resources 714, and/or distributed file system 728 of framework layer 720. The one or more types of software may include, but are not limited to, Internet web page search software, e-mail virus scan software, database software, and streaming video content software.

In at least one embodiment, application(s) 742 included in application layer 740 may include one or more types of applications used by at least portions of node C.R.s 716(1)-716(N), grouped computing resources 714, and/or distributed file system 728 of framework layer 720. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 724, resource manager 726, and resource orchestrator 712 may implement any number and type of self-modifying actions based on any amount and type of data acquired in any technically feasible fashion. In at least one embodiment, self-modifying actions may relieve a data center operator of data center 700 from making possibly bad configuration decisions and possibly avoiding underused and/or poor performing portions of a data center.

In at least one embodiment, data center 700 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 700. In at least one embodiment, trained machine learning models corresponding to one or more neural networks may be used to infer or predict information using resources described above with respect to data center 700 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 715 are used to perform inferencing and/or training operations associated with one or more embodiments. In at least one embodiment, inference and/or training logic 715 may be used in system FIG. 7 for inferencing or predicting operations based, at least in part, on weight parameters calculated using neural network training operations, neural network functions and/or architectures, or neural network use cases described herein.

Such components can be used for live migration.

### COMPUTER SYSTEMS

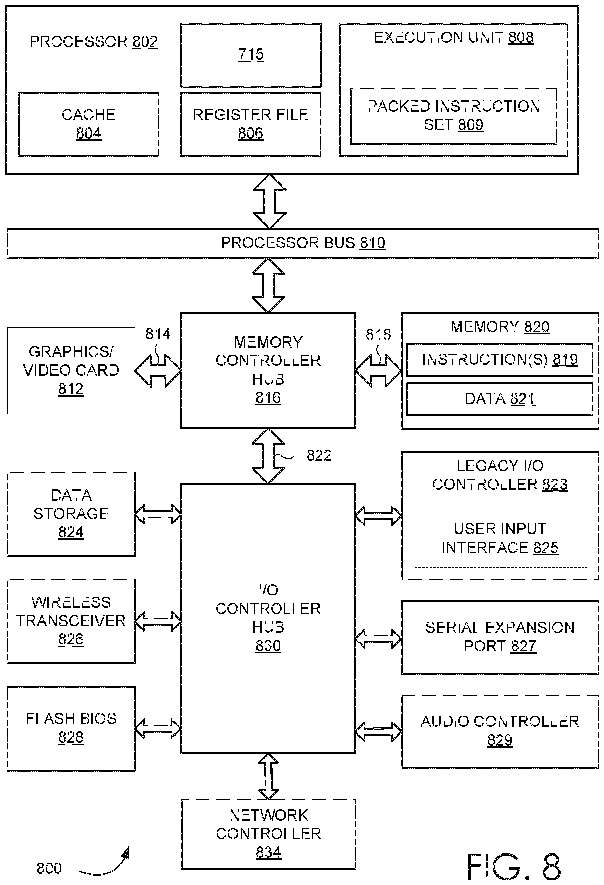

FIG. 8 is a block diagram illustrating an exemplary computer system, which may be a system with interconnected devices and components, a system-on-a-chip (SOC) or some combination thereof 800 formed with a processor that may include execution units to execute an instruction, according to at least one embodiment. In at least one embodiment, computer system 800 may include, without limitation, a component, such as a processor 802 to employ execution units including logic to perform algorithms for process data, in accordance with present disclosure, such as in embodiment described herein. In at least one embodiment, computer system 800 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 800 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 800 may include, without limitation, processor 802 that may include, without limitation, one or more execution units 808 to perform machine learning model training and/or inferencing according to techniques described herein. In at least one embodiment, computer system 800 is a single processor desktop or server system, but in another embodiment computer system 800 may be a multiprocessor system. In at least one embodiment, processor 802 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 802 may be coupled to a processor bus 810 that may transmit data signals between processor 802 and other components in computer system 800.

In at least one embodiment, processor 802 may include, without limitation, a Level 1 ("L1") internal cache memory ("cache") 804. In at least one embodiment, processor 802 may have a single internal cache or multiple levels of internal cache. In at least one embodiment, cache memory may reside external to processor 802. Other embodiments may also include a combination of both internal and external caches depending on particular implementation and needs. In at least one embodiment, register file 806 may store different types of data in various registers including, without limitation, integer registers, floating point registers, status registers, and instruction pointer register.

In at least one embodiment, execution unit 808, including, without limitation, logic to perform integer and floating point operations, also resides in processor 802. In at least one embodiment, processor 802 may also include a microcode ("ucode") read only memory ("ROM") that stores microcode for certain macro instructions. In at least one embodiment, execution unit 808 may include logic to handle a packed instruction set 809. In at least one embodiment, by including packed instruction set 809 in an instruction set of a general-purpose processor 802, along with associated circuitry to execute instructions, operations used by many multimedia applications may be performed using packed data in a general-purpose processor 802. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 808 may also be used in microcontrollers, embedded processors, graphics devices, DSPs, and other types of logic circuits. In at least one embodiment, computer system 800 may include, without limitation, a memory 820. In at least one embodiment, memory 820 may be implemented as a Dynamic Random Access Memory ("DRAM") device, a Static Random Access Memory ("SRAM") device, flash memory device, or other memory device. In at least one embodiment, memory 820 may store instruction(s) 819 and/or data 821 represented by data signals that may be executed by processor 802.

In at least one embodiment, system logic chip may be coupled to processor bus 810 and memory 820. In at least one embodiment, system logic chip may include, without limitation, a memory controller hub ("MCH") 816, and processor 802 may communicate with MCH 816 via processor bus 810. In at least one embodiment, MCH 816 may provide a high bandwidth memory path 818 to memory 820 for instruction and data storage and for storage of graphics commands, data and textures. In at least one embodiment, MCH 816 may direct data signals between processor 802, memory 820, and other components in computer system 800 and to bridge data signals between processor bus 810, memory 820, and a system I/O 822. In at least one embodiment, system logic chip may provide a graphics port for coupling to a graphics controller. In at least one embodiment, MCH 816 may be coupled to memory 820 through a high bandwidth memory path 818 and graphics/video card 812 may be coupled to MCH 816 through an Accelerated Graphics Port ("AGP") interconnect 814.

In at least one embodiment, computer system 800 may use system I/O 822 that is a proprietary hub interface bus to couple MCH 816 to I/O controller hub ("ICH") 830. In at least one embodiment, ICH 830 may provide direct connections to some I/O devices via a local I/O bus. In at least one embodiment, local I/O bus may include, without limitation, a high-speed I/O bus for connecting peripherals to memory 820, chipset, and processor 802. Examples may include, without limitation, an audio controller 829, a firmware hub ("flash BIOS") 828, a wireless transceiver 826, a data storage 824, a legacy I/O controller 823 containing user input and keyboard interface(s) 825, a serial expansion port 827, such as Universal Serial Bus ("USB"), and a network controller 834. Data storage 824 may comprise a hard disk drive, a floppy disk drive, a CD-ROM device, a flash memory device, or other mass storage device.

In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 800 are interconnected using compute express link (CXL) interconnects.

Inference and/or training logic 715 are used to perform inferencing and/or training operations associated with one or more embodiments. In at least one embodiment, inference and/or training logic 715 may be used in system FIG. 8 for inferencing or predicting operations based, at least in part, on weight parameters calculated using neural network training operations, neural network functions and/or architectures, or neural network use cases described herein.

Such components can be used for live migration.

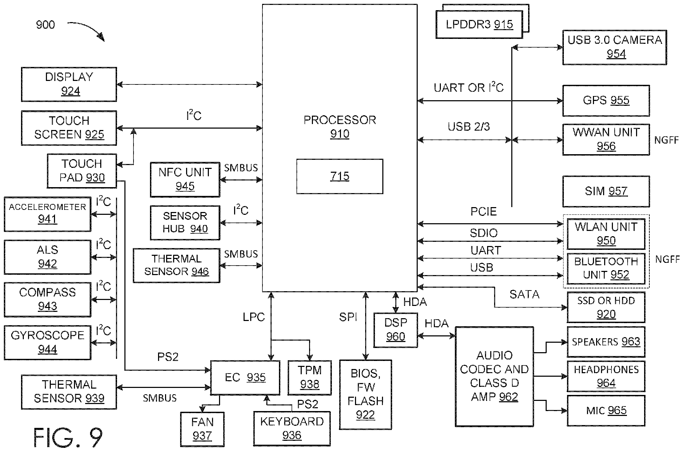

FIG. 9 is a block diagram illustrating an electronic device 900 for utilizing a processor 910, according to at least one embodiment. In at least one embodiment, electronic device 900 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 900 may include, without limitation, processor 910 communicatively coupled to any suitable number or kind of components, peripherals, modules, or devices. In at least one embodiment, processor 910 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 9 illustrates a system, which includes interconnected hardware devices or "chips", whereas in other embodiments, FIG. 9 may illustrate an exemplary System on a Chip ("SoC"). In at least one embodiment, devices illustrated in FIG. 9 may be interconnected with proprietary interconnects, standardized interconnects (e.g., PCIe) or some combination thereof. In at least one embodiment, one or more components of FIG. 9 are interconnected using compute express link (CXL) interconnects.

In at least one embodiment, FIG 9 may include a display 924, a touch screen 925, a touch pad 930, a Near Field Communications unit ("NFC") 945, a sensor hub 940, a thermal sensor 946, an Express Chipset ("EC") 935, a Trusted Platform Module ("TPM") 938, BIOS/firmware/flash memory ("BIOS, FW Flash") 922, a DSP 960, a drive 920 such as a Solid State Disk ("SSD") or a Hard Disk Drive ("HDD"), a wireless local area network unit ("WLAN") 950, a Bluetooth unit 952, a Wireless Wide Area Network unit ("WWAN") 956, a Global Positioning System (GPS) 955, a camera ("USB 3.0 camera") 954 such as a USB 3.0 camera, and/or a Low Power Double Data Rate ("LPDDR") memory unit ("LPDDR3") 915 implemented in, for example, LPDDR3 standard. These components may each be implemented in any suitable manner.

In at least one embodiment, other components may be communicatively coupled to processor 910 through components discussed above. In at least one embodiment, an accelerometer 941, Ambient Light Sensor ("ALS") 942, compass 943, and a gyroscope 944 may be communicatively coupled to sensor hub 940. In at least one embodiment, thermal sensor 939, a fan 937, a keyboard 936, and a touch pad 930 may be communicatively coupled to EC 935. In at least one embodiment, speakers 963, headphones 964, and microphone ("mic") 965 may be communicatively coupled to an audio unit ("audio codec and class d amp") 962, which may in turn be communicatively coupled to DSP 960. In at least one embodiment, audio unit 964 may include, for example and without limitation, an audio coder/decoder ("codec") and a class D amplifier. In at least one embodiment, SIM card ("SIM") 957 may be communicatively coupled to WWAN unit 956. In at least one embodiment, components such as WLAN unit 950 and Bluetooth unit 952, as well as WWAN unit 956 may be implemented in a Next Generation Form Factor ("NGFF").

Inference and/or training logic 715 are used to perform inferencing and/or training operations associated with one or more embodiments. In at least one embodiment, inference and/or training logic 715 may be used in system FIG. 9 for inferencing or predicting operations based, at least in part, on weight parameters calculated using neural network training operations, neural network functions and/or architectures, or neural network use cases described herein.

Such components can be used for live migration.

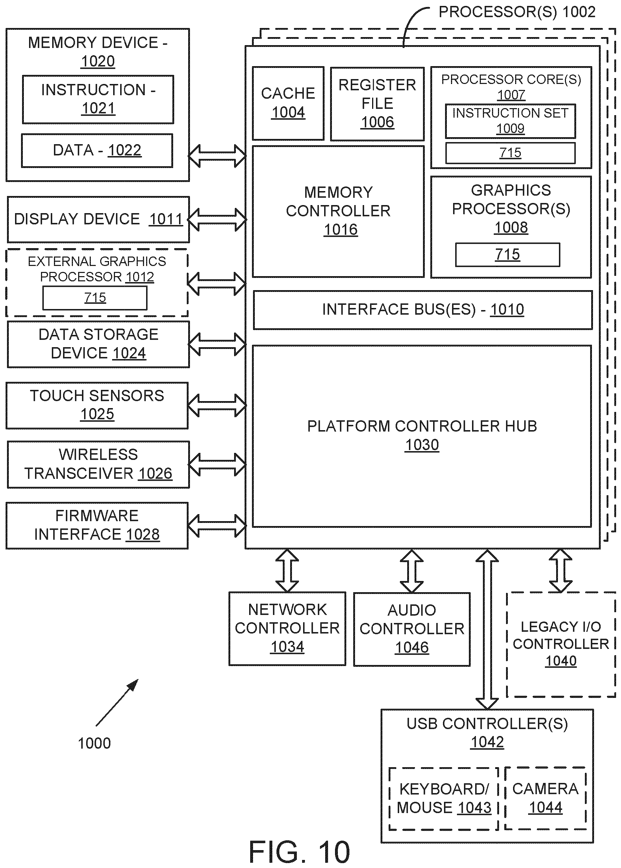

FIG. 10 is a block diagram of a processing system, according to at least one embodiment. In at least one embodiment, system 1000 includes one or more processor(s) 1002 and one or more graphics processor(s) 1008, and may be a single processor desktop system, a multiprocessor workstation system, or a server system having a large number of processor(s) 1002 or processor core(s) 1007. In at least one embodiment, system 1000 is a processing platform incorporated within a system-on-a-chip (SoC) integrated circuit for use in mobile, handheld, or embedded devices.

In at least one embodiment, system 1000 can include, or be incorporated within a server-based gaming platform, a game console, including a game and media console, a mobile gaming console, a handheld game console, or an online game console. In at least one embodiment, system 1000 is a mobile phone, smart phone, tablet computing device or mobile Internet device. In at least one embodiment, processing system 1000 can also include, couple with, or be integrated within a wearable device, such as a smart watch wearable device, smart eyewear device, augmented reality device, or virtual reality device. In at least one embodiment, processing system 1000 is a television or set top box device having one or more processor(s) 1002 and a graphical interface generated by one or more graphics processor(s) 1008.

In at least one embodiment, one or more processor(s) 1002 each include one or more processor core(s) 1007 to process instructions which, when executed, perform operations for system and user software. In at least one embodiment, each of one or more processor core(s) 1007 is configured to process a specific instruction set 1009. In at least one embodiment, instruction set 1009 may facilitate Complex Instruction Set Computing (CISC), Reduced Instruction Set Computing (RISC), or computing via a Very Long Instruction Word (VLIW). In at least one embodiment, processor core(s) 1007 may each process a different instruction set 1009, which may include instructions to facilitate emulation of other instruction sets. In at least one embodiment, processor core(s) 1007 may also include other processing devices, such a Digital Signal Processor (DSP).

In at least one embodiment, processor(s) 1002 includes cache memory 1004. In at least one embodiment, processor(s) 1002 can have a single internal cache or multiple levels of internal cache. In at least one embodiment, cache memory is shared among various components of processor(s) 1002. In at least one embodiment, processor(s) 1002 also uses an external cache (e.g., a Level-3 (L3) cache or Last Level Cache (LLC)) (not shown), which may be shared among processor core(s) 1007 using known cache coherency techniques. In at least one embodiment, register file 1006 is additionally included in processor(s) 1002 which may include different types of registers for storing different types of data (e.g., integer registers, floating point registers, status registers, and an instruction pointer register). In at least one embodiment, register file 1006 may include general-purpose registers or other registers.

In at least one embodiment, one or more processor(s) 1002 are coupled with one or more interface bus(es) 1010 to transmit communication signals such as address, data, or control signals between processor(s) 1002 and other components in system 1000. In at least one embodiment, interface bus(es) 1010, in one embodiment, can be a processor bus, such as a version of a Direct Media Interface (DMI) bus. In at least one embodiment, interface bus(es) 1010 is not limited to a DMI bus, and may include one or more Peripheral Component Interconnect buses (e.g., PCI, PCI Express), memory busses, or other types of interface busses. In at least one embodiment processor(s) 1002 include an integrated memory controller 1016 and a platform controller hub 1030. In at least one embodiment, memory controller 1016 facilitates communication between a memory device and other components of system 1000, while platform controller hub (PCH) 1030 provides connections to I/O devices via a local I/O bus.

In at least one embodiment, memory device 1020 can be a dynamic random access memory (DRAM) device, a static random access memory (SRAM) device, flash memory device, phase-change memory device, or some other memory device having suitable performance to serve as process memory. In at least one embodiment memory device 1020 can operate as system memory for system 1000, to store data 1022 and instruction 1021 for use when one or more processor(s) 1002 executes an application or process. In at least one embodiment, memory controller 1016 also couples with an optional external graphics processor 1012, which may communicate with one or more graphics processor(s) 1008 in processor(s) 1002 to perform graphics and media operations. In at least one embodiment, a display device 1011 can connect to processor(s) 1002. In at least one embodiment display device 1011 can include one or more of an internal display device, as in a mobile electronic device or a laptop device or an external display device attached via a display interface (e.g., DisplayPort, etc.). In at least one embodiment, display device 1011 can include a head mounted display (HMD) such as a stereoscopic display device for use in virtual reality (VR) applications or augmented reality (AR) applications.

In at least one embodiment, platform controller hub 1030 enables peripherals to connect to memory device 1020 and processor(s) 1002 via a high-speed I/O bus. In at least one embodiment, I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). In at least one embodiment, data storage device 1024 can connect via a storage interface (e.g., SATA) or via a peripheral bus, such as a Peripheral Component Interconnect bus (e.g., PCI, PCI Express). In at least one embodiment, touch sensors 1025 can include touch screen sensors, pressure sensors, or fingerprint sensors. In at least one embodiment, wireless transceiver 1026 can be a Wi-Fi transceiver, a Bluetooth transceiver, or a mobile network transceiver such as a 3G, 4G, or Long Term Evolution (LTE) transceiver. In at least one embodiment, firmware interface 1028 enables communication with system firmware, and can be, for example, a unified extensible firmware interface (UEFI). In at least one embodiment, network controller 1034 can enable a network connection to a wired network. In at least one embodiment, a high-performance network controller (not shown) couples with interface bus(es) 1010. In at least one embodiment, audio controller 1046 is a multi-channel high definition audio controller. In at least one embodiment, system 1000 includes an optional legacy I/O controller 1040 for coupling legacy (e.g., Personal System 2 (PS/2)) devices to system. In at least one embodiment, platform controller hub 1030 can also connect to one or more Universal Serial Bus (USB) controller(s) 1042 connect input devices, such as keyboard and mouse 1043 combinations, a camera 1044, or other USB input devices.

In at least one embodiment, an instance of memory controller 1016 and platform controller hub 1030 may be integrated into a discreet external graphics processor, such as external graphics processor 1012. In at least one embodiment, platform controller hub 1030 and/or memory controller 1016 may be external to one or more processor(s) 1002. For example, in at least one embodiment, system 1000 can include an external memory controller 1016 and platform controller hub 1030, which may be configured as a memory controller hub and peripheral controller hub within a system chipset that is in communication with processor(s) 1002.

Inference and/or training logic 715 are used to perform inferencing and/or training operations associated with one or more embodiments. In at least one embodiment portions or all of inference and/or training logic 715 may be incorporated into graphics processor(s) 1008. For example, in at least one embodiment, training and/or inferencing techniques described herein may use one or more of ALUs embodied in a graphics processor. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components can be used for live migration.

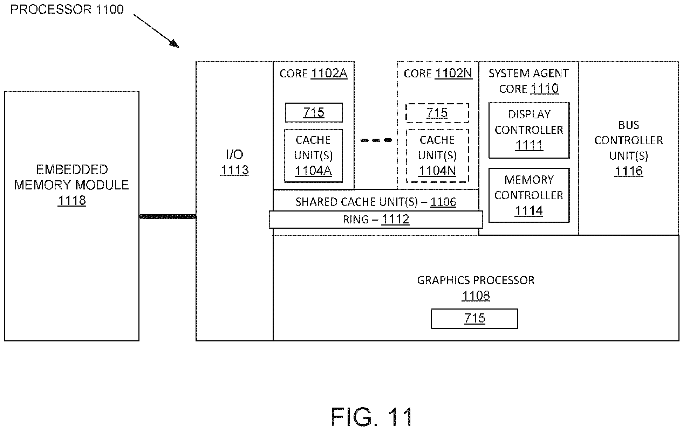

FIG. 11 is a block diagram of a processor 1100 having one or more processor core(s) 1102A-1102N, an integrated memory controller 1114, and an integrated graphics processor 1108, according to at least one embodiment. In at least one embodiment, processor 1100 can include additional cores up to and including additional core 1102N represented by dashed lined boxes. In at least one embodiment, each of processor core(s) 1102A-1102N includes one or more internal cache unit(s) 1104A-1104N. In at least one embodiment, each processor core also has access to one or more shared cached unit(s) 1106.

In at least one embodiment, internal cache unit(s) 1104A-1104N and shared cache unit(s) 1106 represent a cache memory hierarchy within processor 1100. In at least one embodiment, cache unit(s) 1104A-1104N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache unit(s) 1106 and 1104A-1104N.

In at least one embodiment, processor 1100 may also include a set of one or more bus controller unit(s) 1116 and a system agent core 1110. In at least one embodiment, one or more bus controller unit(s) 1116 manage a set of peripheral buses, such as one or more PCI or PCI express busses. In at least one embodiment, system agent core 1110 provides management functionality for various processor components. In at least one embodiment, system agent core 1110 includes one or more integrated memory controllers 1114 to manage access to various external memory devices (not shown).

In at least one embodiment, one or more of processor core(s) 1102A-1102N include support for simultaneous multi-threading. In at least one embodiment, system agent core 1110 includes components for coordinating and operating processor core(s) 1102A-1102N during multi-threaded processing. In at least one embodiment, system agent core 1110 may additionally include a power control unit (PCU), which includes logic and components to regulate one or more power states of processor core(s) 1102A-1102N and graphics processor 1108.

In at least one embodiment, processor 1100 additionally includes graphics processor 1108 to execute graphics processing operations. In at least one embodiment, graphics processor 1108 couples with shared cache unit(s) 1106, and system agent core 1110, including one or more integrated memory controllers 1114. In at least one embodiment, system agent core 1110 also includes a display controller 1111 to drive graphics processor output to one or more coupled displays. In at least one embodiment, display controller 1111 may also be a separate module coupled with graphics processor 1108 via at least one interconnect, or may be integrated within graphics processor 1108.

In at least one embodiment, a ring based interconnect unit 1112 is used to couple internal components of processor 1100. In at least one embodiment, an alternative interconnect unit may be used, such as a point-to-point interconnect, a switched interconnect, or other techniques. In at least one embodiment, graphics processor 1108 couples with ring based interconnect unit 1112 via an I/O link 1113.

In at least one embodiment, I/O link 1113 represents at least one of multiple varieties of I/O interconnects, including an on package I/O interconnect which facilitates communication between various processor components and a high-performance embedded memory module 1118, such as an eDRAM module. In at least one embodiment, each of processor core(s) 1102A-1102N and graphics processor 1108 use embedded memory modules 1118 as a shared Last Level Cache.

In at least one embodiment, processor core(s) 1102A-1102N are homogenous cores executing a common instruction set architecture. In at least one embodiment, processor core(s) 1102A-1102N are heterogeneous in terms of instruction set architecture (ISA), where one or more of processor core(s) 1102A-1102N execute a common instruction set, while one or more other cores of processor core(s) 1102A-1102N executes a subset of a common instruction set or a different instruction set. In at least one embodiment, processor core(s) 1102A-1102N are heterogeneous in terms of microarchitecture, where one or more cores having a relatively higher power consumption couple with one or more power cores having a lower power consumption. In at least one embodiment, processor 1100 can be implemented on one or more chips or as an SoC integrated circuit.

Inference and/or training logic 715 are used to perform inferencing and/or training operations associated with one or more embodiments. In at least one embodiment portions or all of inference and/or training logic 715 may be incorporated into processor 1100. For example, in at least one embodiment, training and/or inferencing techniques described herein may use one or more of ALUs embodied in graphics processor 1108, processor core(s) 1102A-1102N, or other components in FIG. 11. In at least one embodiment, weight parameters may be stored in on-chip or off-chip memory and/or registers (shown or not shown) that configure ALUs of graphics processor 1100/1108 to perform one or more machine learning algorithms, neural network architectures, use cases, or training techniques described herein.

Such components can be used for live migration.

Various embodiments can be described by the following clauses:
1. A computer-implemented method, comprising:
   determining a virtual machine (VM) is to be migrated from a first server to a second server during a live migration event;
   determining a period of time during which the VM is to be migrated to the second server;
   transmitting a first message to a node exchanging traffic with the VM, the first message providing a first notification regarding a first status of the VM;
   determining the period of time is complete and the VM is configured to receive traffic; and
   transmitting, after the period of time, a second message to the node providing a second notification regarding a second status of the VM.
2. The computer-implemented method of clause 1, wherein the first status is an offline status and the second status is an online status.
3. The computer-implemented method of clause 1, wherein the first message is transmitted prior to a start of the period of time.
4. The computer-implemented method of clause 1, further comprising:
   broadcasting, to a plurality of nodes associated with a network including the VM, the first message.
5. The computer-implemented method of clause 1, wherein the node is configured to modify one or more timeout parameters based on the first message.
6. The computer-implemented method of clause 5, wherein the node is configured to return to previous timeout parameters based on the second message.
7. The computer-implemented method of clause 1, wherein the traffic is transmitted along a reliable network connection.
8. The computer-implemented method of clause 1, further comprising:
   providing, after sending the first message and before sending the second message, one or more intermediate messages to the node.
9. The computer-implemented method of clause 8, wherein the one or more intermediate messages to the node are updates regarding the first status.
10. The computer-implemented method of clause 5, further comprising:
   providing one or more periodic messages to the node based, at least, on the first message.
11. The computer-implemented method of clause 5, further comprising:
   providing one or more periodic messages regarding an update to the first status.
12. A computer-implemented method, comprising:
   determining a virtual machine (VM) is subject to a live migration event;
   determining, during the live migration event, the VM has an offline status;
   receiving, while the VM has the offline status, traffic from a node directed toward the VM; and
   providing, responsive to the traffic, a first notification to the node associated with the offline status of the VM.
13. The computer-implemented method of clause 12, further comprising:
   determining the VM has an online status in which the VM can receive traffic;
   providing, responsive to the VM online status, a second notification to the node associated with the online status of the VM.
14. The computer-implemented method of clause 12, wherein the first notification includes an estimated time for the offline status of the VM.
15. The computer-implemented method of clause 12, further comprising:
   providing, while the VM has the offline status, periodic notifications to the node.
16. The computer-implemented method of clause 12, wherein the node is configured to modify one or more timeout parameters based on the first notification.
17. The computer-implemented method of clause 12, wherein the traffic is associated with a reliable network connection.
18. The computer-implemented method of clause 17, wherein the reliable network connection includes at least one of transmission control protocol, remote direct memory access reliable connection, or remote direct memory access dynamic connection.
19. A processor comprising:
   one or more processing units to:
   determine a virtual machine (VM) is scheduled for an offline period during a live migration event; and
   provide a message, to one or more nodes associated with the VM, indicative of a status of the VM during the live migration event.
20. The processor of clause 19, wherein the one or more processing units are further to:
   receive traffic from a node of the one or more nodes when a status of the VM corresponds to an offline status, wherein the message is provided responsive to the traffic.
21. The processor of clause 20, wherein the message includes an anticipated period of time the VM will have the offline status.
22. The processor of clause 20, wherein the message includes instructions to modify one or more timeout settings for the node.
23. The processor of clause 19, wherein the one or more processing units are further to:
   determine the status of the VM is an offline status, wherein the message is provided responsive to the determination of the status of the VM.
24. The processor of clause 19, wherein the processor is comprised in at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system for performing operations for a conversational AI application;
   a system for performing operations for a generative AI application;
   a system for performing operations using a language model;
   a system for performing one or more generative content operations using a large language model (LLM);
   a system implemented at least partially in a data center;
   a system for performing hardware testing using simulation;
   a system for performing one or more generative content operations using a language model;
   a system for synthetic data generation;
   a collaborative content creation platform for 3D assets; or
   a system implemented at least partially using cloud computing resources.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset," unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, term "plurality" indicates a state of being plural (e.g., "a plurality of items" indicates multiple items). A plurality is at least two items, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. Obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of this disclosure. Furthermore, although specific distributions of responsibilities are defined above for purposes of discussion, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A computer-implemented method, comprising:
determining a virtual machine (VM) is to be migrated from a first server to a second server during a live migration event;
determining a period of time during which the VM is to be migrated to the second server;
transmitting a first message to a node exchanging traffic with the VM, the first message providing a first notification regarding a first status of the VM;
determining the period of time is complete and the VM is configured to receive traffic; and
transmitting, after the period of time, a second message to the node providing a second notification regarding a second status of the VM.

2. The computer-implemented method of claim 1, wherein the first status is an offline status and the second status is an online status.

3. The computer-implemented method of claim 1, wherein the first message is transmitted prior to a start of the period of time.

4. The computer-implemented method of claim 1, further comprising:
broadcasting, to a plurality of nodes associated with a network including the VM, the first message.

5. The computer-implemented method of claim 1, wherein the node is configured to modify one or more timeout parameters based on the first message, wherein the node is configured to return to previous timeout parameters based on the second message.

6. The computer-implemented method of claim 1, further comprising:
providing, after sending the first message and before sending the second message, one or more intermediate messages to the node, wherein the one or more intermediate messages to the node are updates regarding the first status.

7. The computer-implemented method of claim 5, further comprising:
providing one or more periodic messages to the node based, at least, on the first message; and/or
providing one or more periodic messages regarding an update to the first status.

8. A computer-implemented method, comprising:
determining a virtual machine (VM) is subject to a live migration event;
determining, during the live migration event, the VM has an offline status;
receiving, while the VM has the offline status, traffic from a node directed toward the VM; and
providing, responsive to the traffic, a first notification to the node associated with the offline status of the VM.

9. The computer-implemented method of claim 8, further comprising:
determining the VM has an online status in which the VM can receive traffic;
providing, responsive to the VM online status, a second notification to the node associated with the online status of the VM.

10. The computer-implemented method of claim 8, wherein the first notification includes an estimated time for the offline status of the VM, further comprising:
providing, while the VM has the offline status, periodic notifications to the node.,
wherein the node is configured to modify one or more timeout parameters based on the first notification.

11. The computer-implemented method of claim 8, wherein the traffic is associated with a reliable network connection, wherein the reliable network connection includes at least one of transmission control protocol, remote direct memory access reliable connection, or remote direct memory access dynamic connection.

12. A processor comprising:
one or more processing units to:
determine a virtual machine (VM) is scheduled for an offline period during a live migration event; and
provide a message, to one or more nodes associated with the VM, indicative of a status of the VM during the live migration event.

13. The processor of claim 12, wherein the one or more processing units are further to:
receive traffic from a node of the one or more nodes when a status of the VM corresponds to an offline status, wherein the message is provided responsive to the traffic, wherein the message includes an anticipated period of time the VM will have the offline status and/or instructions to modify one or more timeout settings for the node.

14. The processor of claim 12, wherein the one or more processing units are further to:
determine the status of the VM is an offline status, wherein the message is provided responsive to the determination of the status of the VM.

15. The processor of claim 12, wherein the processor is comprised in at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system for performing operations for a conversational AI application;
a system for performing operations for a generative AI application;
a system for performing operations using a language model;
a system for performing one or more generative content operations using a large language model (LLM);
a system implemented at least partially in a data center;
a system for performing hardware testing using simulation;
a system for performing one or more generative content operations using a language model;
a system for synthetic data generation;
a collaborative content creation platform for 3D assets; or
a system implemented at least partially using cloud computing resources.
